Europäisches Patentamt

**European Patent Office**

**Office européen des brevets**

(11) Numéro de publication: **0 171 848**
**A1**

(12) **DEMANDE DE BREVET EUROPEEN**

(21) Numéro de dépôt: **85201202.0**

(22) Date de dépôt: **17.07.85**

(51) Int. Cl.⁴: **G 01 P 13/00**
**G 01 P 15/09, G 01 P 1/12**

(30) Priorité: **26.07.84 EP 84870106**

(43) Date de publication de la demande:
**19.02.86 Bulletin 86/8**

(84) Etats contractants désignés:
**AT BE CH DE FR GB IT LI LU NL SE**

(71) Demandeur: **UNIVERSITE CATHOLIQUE DE LOUVAIN**
**Place de l'Université, 1**
**B-1348 Louvain la Neuve(BE)**

(72) Inventeur: **Eugene, Christian, Prof.**
**Avenue du 14 juillet, 12**
**B-5872 Corroy-Le-Grand(BE)**

(72) Inventeur: **Gueuning, Francis**
**Rue René Lepers, 30**
**B-7940 Braine-Le-Comte(BE)**

(74) Mandataire: **Bossard, Franz et al,**
**ACEC - Service des Brevets Boîte Postale 4**
**B-6000 Charleroi(BE)**

(54) Dispositif détecteur de mouvements et appareil enregistreur des mouvements détectes.

㊼ Un dispositif détecteur de mouvements d'un support (14) sur liquel il est fixé, comprend au moins un élément piézo-électrique (1) muni d'électrodes (2) sollicité suite à des mouvements du dit support ; l'élément piézo-électrique (1) est solidaire d'un récipient (3) et un grain (4) est emprisonné de manière mobile dans le récipient (3). Ce grain engendre des chocs sur les parois du récipient (3) qui se transmettent à l'élément piézo-électrique (1) et produisent des variations de charges électriques aux électrodes (2) de ce dernier.

Fig.1

EP 0 171 848 A1

DISPOSITIF DÉTECTEUR DE MOUVEMENTS ET APPAREIL ENREGISTREUR DES MOUVEMENTS DÉTECTÉS.

Un appareil détecteur et enregistreur de mouvements connu est décrit dans Biomedical Sciences Instrumentation Symposium ISABM76322,(1976) pages 117 à 122. Cet appareil comprend un dispositif détecteur, associé à un circuit d'enregistrement des signaux détectés, agencé pour être attaché à un support mobile, notamment un membre d'un corps animal ou humain,tel un poignet. La lecture des signaux enregistrés, ainsi qu'un traitement de données de ces signaux a lieu après enlèvement de l'appareil du support et est réalisé à l'aide d'un ordinateur, notamment d'un mini-ordinateur.

Le dispositif détecteur proprement dit de cet appareil connu est constitué d'un élément piézo-électrique muni d'électrodes, sollicité suite à des mouvements du dit support. L'élément piézo-électrique est un bilame piézo-électrique susceptible d'osciller en direction perpendiculaire par rapport aux faces réunies des lames du bilame. Ce détecteur est particulièrement sensible à des composantes d'accélérations parallèles à la direction d'oscillation de l'élément piézo-électrique et introduit ainsi un biais dans les mesures en faveur d'une direction de mesure préférentielle. Cet inconvénient peut être surmonté en utilisant plusieurs bilames piézo-électriques orientés dans des directions différentes, mais au prix de complications de montage et de circuits. Il est à remarquer que ce détecteur connu est insensible à des mouvements lents pour lesquels la valeur de l'accélération reste en dessous d'un seuil de détection déterminé par la rigidité des bilames piézo-électriques.

L'invention a pour but un dispositif détecteur de mouvements extrêmement simple, très sensible, notamment à des mouvements lents et garantissant la détection de mouvements dans toutes les directions. Un autre but de l'invention est un appareil de détection et d'enregistrement particulièrement performant, adapté aux signaux fournis par le dispositif détecteur. Le détecteur suivant l'invention fonctionne dès que l'amplitude d'un mouvement est suffisante, même en cas d'accélérations de valeurs voisines de zéro.

Un dispositif détecteur de mouvements suivant l'invention

34.01/1956

est caractérisé en ce que l'élément piézo-électrique fixé au support est solidaire d'au moins un récipient et en ce qu'un grain est emprisonné de manière mobile dans le ou chaque récipient, grain qui lors de mouvements ou vibrations du support engendre des chocs sur la ou les parois du récipient, chocs qui se transmettent à l'élement piézo-électrique et produisent des variations de charges·électriques aux électrodes de ce dernier.

Le récipient peut être un boîtier polyédrique et le grain une bille. A l'inverse, le récipient peut être une sphère creuse et le grain un polyèdre régulier.

L'élément piézo-électrique peut être, par exemple, une plaquette en matériau céramique ou peut être constitué d'un film piézo-électrique, par exemple en polyvinyle difluoride, fixé sur une plaque support ou tout autre matériau piézo-électrique.

Un appareil enregistreur de mouvements suivant l'invention comprend au moins un tel dispositif détecteur et un circuit de détection et de mémorisation de signaux engendrés suite aux impacts du grain sur la ou les parois du ou des récipients.

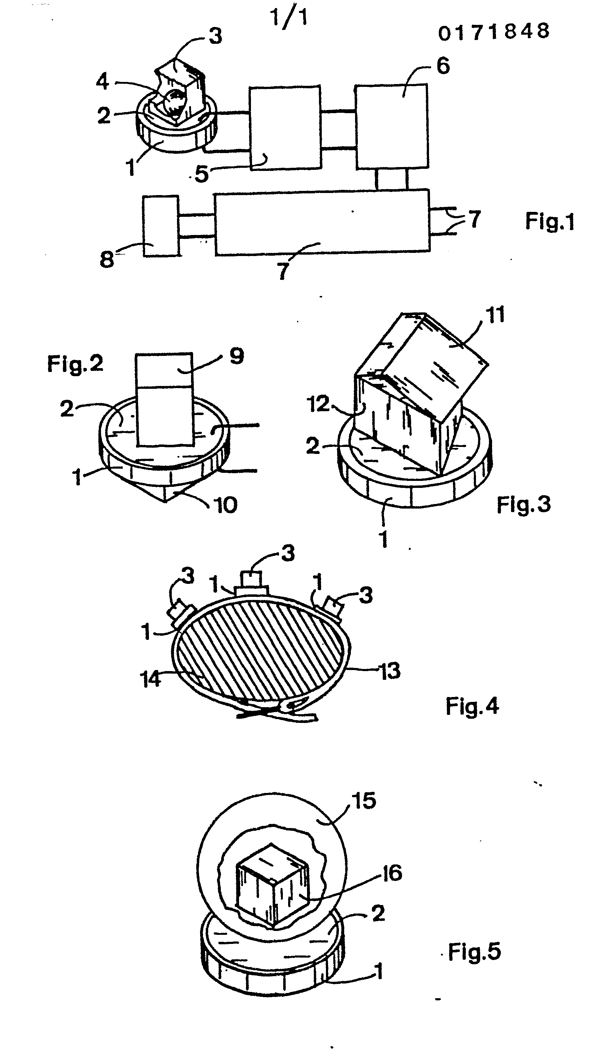

L'invention est expliquée ci-dessous par rapport à deux exemples de formes d'exécution différentes, en se référant au dessin annexé. La figure 1 est un schéma d'un appareil suivant l'invention montrant, en perspective, partiellement en coupe, un dispositif détecteur. Les figures 2 et 3 montrent des vues en perspective de variantes du dispositif suivant la figure 1. La figure 4 montre un appareil équipé de plusieurs dispositifs de détection suivant la figure 1. La figure 5 montre en perspective, partiellement en coupe, un autre dispositif détecteur de mouvements suivant l'invention.

A la figure 1, un élément piézo-électrique 1, en l'occurrence sous forme d'une galette cylindrique, est munie d'électrodes 2 sur les faces perpendiculaires à son axe. Un récipient cubique 3 en laiton est solidarisé avec une des électrodes 2, par exemple par brasage et de ce fait avec l'élément piézo-électrique 1. Le récipient 3 est fermé, mais sur le dessin une découpe permet de voir l'intérieur où se trouve un grain, en l'occurence une bille 4. Les électrodes 2 sont en général reliées à l'entrée d'un ensemble amplificateur 5 et générateur d'impulsions de comptage 6 dont les sorties sont appliquées à un ensemble 7 comprenant un système de gestion et une mémoire de données gérée en temps réel du fait de l'association du système de gestion à une horloge 8. L'ensemble 7 est accessible de l'extérieur à l'aide de fils de raccordement 7' permettant de le relier temporairement à un ordinateur, ou mini-ordinateur ou tout autre appareil de lecture et de traitement de données, afin de lire les données et de les soumettre, éventuellement, à un traitement de données. Le traitement de données peut se résumer en une simple impression suivant un format prédeterminé ou peut comprendre le calcul de diverses grandeurs et/ou la sélection de certaines valeurs mesurées particulières en fonction de certains critères fixés à l'avance ou élaborés en fonction des grandeurs calculées. Une pile, non montrée sur le dessin, fait partie de l'équipement de l'appareil. L'appareil est conçu et agencé pour être attaché à un support, sujet à des vibrations ou chocs, ou à un élément ou membre exécutant des mouvements souples, même très lents.

L'ensemble amplificateur 5 et générateur d'impulsions 6 est nécessaire seulement si l'appareil est à haute performance. Si les impulsions en dessous d'un niveau déterminé apparaissant sur les électrodes 2 doivent être négligées, il est possible soit de supprimer l'amplificateur 5, soit de supprimer à la fois l'amplificateur 5 et le générateur d'impulsions 6, et de relier les électrodes 2 directement à l'ensemble mémoire et système de gestion 7.      De toute manière, le terme "amplificateur" est compris ici dans un sens large, et signifie tout dispositif modifiant l'énergie d'une impulsion soit en l'augmentant, soit en la diminuant.

L'ensemble 7 comprend un système de gestion et une mémoire. Le système de gestion peut être un système cablé, mais de préférence un système à micro-calculateur associé à une mémoire programme permettant un libre choix des paramètres d'exploitation de la mémoire et offrant la possibilité d'une compression "intelligente" des données avant de les enregistrer dans la mémoire. Les paramètres accessibles grâce à un système à micro-calculateur sont par exemple le temps du début de l'enregistrement, le temps de fin de l'enregistrement, la fixation des intervalles de comptage, les critères de discrimination permettant la classification des résultats du comptage d'impulsions, etc.

La mémoire de données gérée en temps réel enregistre les résultats de comptages d'impulsions, par exemple x intervalles consécutifs pendant lesquels on a compté entre.Cm et Cn impulsions, y intervalles consécutifs pendant lesquels on a compté entre Cp et Cq impulsions (Cm Cn Cp Cq étant des critères de discrimination de classification des résultats) etc. En l'occurrence, il est possible ainsi d'enregistrer dans une mémoire de 8 kilo octets des mesures de mobilité d'un poignet pendant environ 20 jours.

Pour ce faire, le système de gestion comprend des moyens de sélection et de classement de résultats de comptage. A l'aide de ces moyens, on choisit par exemple un intervalle de comptage de une minute et on classe les résultats en 7 classes : moins d'un choc par minute, de 1 à 3 chocs par minute, de 4 à 10, de 11 à 30, de 31 à 100, de 101 à 300, et de plus de 300 chocs par minute. Des moyens de mémorisation sont prévus pour enregistrer le nombre d'intervalles consécutifs entrant dans une même classe de résultats.

Le récipient cubique 3 de l'exemple suivant la figure 1 peut être en un autre matériau rigide que le laiton pourvu qu'il permette la transmission élastique des chocs du grain sur la ou les parois du récipient 3 vers l'élément piézo-électrique 1. Les mêmes conditions valent pour les matières intermédiaires de liaison : brasures, colles durcies, ciments etc.

Le récipient doit être fermé de manière à empêcher que le grain y enfermé ne puisse sortir; il ne doit pas nécessairement être fermé hermétiquement.

La bille 4 est par exemple en acier, elle est choisie d'un diamètre relativement grand par exemple entre 0,5 à 0,9 fois le diamètre de la sphère la plus grande inscrite à l'intérieur du récipient 3. Elle peut être faite en un autre matériau que l'acier, de préférence un matériau à densité élevée, surtout si le récipient 3 est petit, présentant par exemple un côté de longueur inférieure à 10 mm.

Un dispositif détecteur dont le récipient polyédrique est un cube 3 permet de détecter la mobilité d'un support tel qu'un poignet dans toutes les directions, indépendamment de la lenteur du mouvement.

En lieu et place d'un cube, d'autres polyèdres peuvent être choisis, notamment des polyèdres réguliers, sans que cela soit indispensable, par exemple tétraèdre, octaèdre etc. Suivant la forme du récipient choisi, la détection de certains mouvements peut nécessiter des amplitudes de mouvement relativement grandes. Cela est surtout vrai pour des polyèdres à faible nombre de faces. La sensibilité du dispositif peut être améliorée en disposant par exemple deux cubes 9 et 10, chacun renfermant une bille 4, l'un d'un côté et l'autre de l'autre côté de l'élément piézo-électrique 1 (Fig. 2) et en décalant de 45° l'orientation des faces perpendiculaires aux électrodes 2 d'un des cubes par rapport à celles de l'autre. Le même effet est obtenu, si les deux cubes 9 et 10 étaient fixés du même côté de l'élément piézo-électrique 1 sur la même électrode 2, mais cela pourrait nécessiter le choix d'un élément piézo-électrique plus grand. Rien n'empêche de prévoir encore davantage de cubes orientés de préférence de manière à ce que les parois d'un cube ne soient pas parallèles aux parois d'un autre cube.

Une autre manière d'augmenter le nombre de faces polyédriques non parallèles du dispositif de détection est représenté à la figure 3. Deux récipients polyédriques imbriqués l'un dans l'autre, chacun renfermant une bille sont constitués par un cube 11 plongeant par un de ses coins dans un prisme 12 de section triangulaire. La base du prisme 12 est solidarisée avec une des électrodes 2 d'un élément piézo-électrique 1.

Il est possible d'autre part, suivant la figure 4, de multiplier le nombre d'éléments piézo-électriques 1 et de fixer ces éléments 1 par exemple sur un bracelet 13. Le bracelet 13 supporte tous les éléments de circuit selon la figure 1. Les électrodes 2 des différents éléments piézo-électriques 1 sont reliées en parallèle à l'entrée de l'ensemble amplificateur 5 et générateur d'impulsions 6. Le bracelet 13 encercle un support mobile, tel un poignet 14 montré en coupe. Trois éléments piézo-électriques 1 sont disposés à des endroits du bracelet 13 tels que les bases des cubes 3 de part et d'autre du sommet du poignet 14 sont inclinés de 30° environ par rapport au cube 3 sur le sommet. Sur le bracelet 13 posé à plat, les cubes 3 sur les différents éléments piézo-électriques 1 sont également décalés de 30° par rapport au plan de symétrie longitudinal du bracelet, en passant d'un cube au cube voisin. Ainsi, dans l'assemblage de trois éléments 1 et cubes 3 fixés sur le poignet 14, une face d'un cube quelconque n'est jamais parallèle à une face d'un autre cube. Un tel assemblage présente une sensibilité très grande à des mouvements de faible amplitude dans n'importe quelle direction.

Lors d'un mouvement quelconque du support sur lequel est attaché un dispositif détecteur comprenant un récipient renfermant un grain, les chocs produits par le déplacement du grain dans le récipient se transmettent à travers le matériau constituant le récipient à l'élément piézo-électrique et y engendrent des déplacements de charges électriques à l'endroit des électrodes 2 d'autant plus importantes que le choc est violent.

Dans le cas d'un récipient cubique 3 renfermant une bille 4 un choc mettant en jeu une énergie environ égale à l'énergie potentielle d'une bille maintenue contre une face horizontale supérieure du cube par rapport à la face opposée en dessous d'elle constitue un choc d'une violence normale.

Si l'énergie mise en jeu est beaucoup plus faible, ce qui peut arriver lorsqu'une bille voyage sur une face horizontale suite à des mouvements minimes dûs par exemple à la respiration pendant le sommeil, il est possible d'exclure le comptage et l'enregistrement d'impulsions d'aussi faible énergie au moyen d'un seuil de détection, éventuellement variable, disposé dans le circuit de l'amplificateur 5 ou du générateur d'impulsions 6.

A l'opposé, un choc d'une énergie beaucoup plus élevée que la normale ci-dessus peut se produire à l'occasion de mouvements brusques ou saccadés. Dans de tels cas la bille rebondit plusieurs fois sur des faces polyédriques différentes et engendre une série d'impulsions d'énergie décroissante dont chacune peut être comptée. Le nombre des impulsions d'une telle série peut permettre d'apprécier la violence des mouvements.

Si cette appréciation de la violence des mouvements est importante, des intervalles de comptage très courts sont prévus pour effectuer des mesures de la violence des mouvements par exemple en mémorisant le nombre maximum d'impulsions comptées dans une série d'un certain nombre de tels intervalles très courts.

Si au contraire cette violence des mouvements n'intéresse pas, un temps mort de détection peut être prévu soit au niveau de l'amplificateur 5, soit au niveau du générateur d'impulsions 6, afin d'exclure le comptage des rebondissements. La durée du temps mort peut être choisi toujours égal ou au contraire peut être fonction de l'énergie de la première impulsion enregistrée ; plus longue pour une impulsion à énergie élevée, moins longue pour une impulsion à faible énergie.

A la figure 5 un autre exemple de réalisation d'un dispositif de détection est montré. Le récipient est une sphère creuse 15 dans laquelle est enfermé un grain 16 à faces multiples, par exemple un polyèdre régulier tel qu'un cube éventuellement à arêtes arrondies. La face intérieure de la sphère 15 est de préférence rugueuse afin d'obliger le grain 16 à culbuter et d'éviter son glissement. Les chocs enregistrés dans ce cas sont ceux engendrés par les basculements du grain polyédrique 16. La taille du grain 16 est choisie relativement grande, de préférence de manière que la sphère circonscrite la plus petite du grain présente un diamètre mesurant entre 0,5 et 0,9 du diamètre de la sphère creuse 15.

L'enregistrement des chocs produits dans le dispositif de détection peut se faire comme décrit ci-dessus à l'endroit de ce dispositif, par exemple sur un bracelet supportant aussi des mémoires de taille suffisante. Il est possible aussi de transmettre les valeurs mesurées au moyen d'un système à câbles ou autre, tel que système à émetteur-récepteur, à un poste central, soit au fur et à mesure de l'apparition de ces valeurs, soit en interrogeant à des moments ou endroits choisis une mémoire temporaire associée au dispositif de détection. Un système de transmission par câbles souples peut être envisagé par exemple lorsque l'appareil de détection est porté par une personne alitée. Un système de transmission à émetteur-récepteur est à envisager notamment lorsque la personne ou l'animal porteur de l'appareil de détection passe régulièrement par un endroit déterminé.

Plusieurs détecteurs de mouvement peuvent être disposés sur des membres différents d'un corps humain ou animal, par exemple dans le cas d'un animal ruminant, un détecteur au cou, un autre à une jambe ou aux cornes pour distinguer marche, broutage, ruminage et sommeil. Les différents détecteurs peuvent alors être reliés à un seul dispositif d'enregistrement sur l'animal. Il est également possible d'effectuer, au moyen d'un ou de plusieurs systèmes appropriés, associés à l'ensemble dispositifs de détection et dispositif d'enregistrement, un dépistage d'échantillons de mobilité particuliers, représentatifs d'états caractéristiques, critiques ou maladifs et relevés pendant des durées d'échantillonnage longs, par exemple, des périodes de plusieures heures chaque jour, déclenchés à heures fixes ou en fonction d'évènements extérieurs (levée du jour, entrée dans l'enceinte d'un terrain d'entraînement, etc...). Dans un tel cas, l'appareil ou le poste central comprend de préférence un ou plusieurs dispositifs d'affichage, par exemple relais à clapet, lampes témoin, sonnerie etc... actionnés par le ou les dits systèmes de dépistage lors de l'apparition d'échantillons de mobilité caractéristiques, prédéterminés.

L'appareil peut être raccordé en permanence à des dispositifs d'alarme et/ou de signalisation et peut ainsi servir à la surveillance de vibrations ou d'absence de vibrations par exemple de planchers, de vitres, parties de machines, etc. ou au contrôle de mouvements ou d'absence de mouvements de portes, tiroirs, fenêtres, organes de machines. L'appareil suivant l'invention peut donc être utilisé, hormis en médecine humaine et vétérinaire, aussi comme dispositif antivol et comme dispositif d'alarme dans des installations industrielles.

1

0171848

REVENDICATIONS

1° Dispositif détecteur de mouvements d'un support (14) sur lequel il est fixé, comprenant au moins un élément piézo-électrique (1) muni d'électrodes (2) sollicité suite à des mouvements du dit support,

caractérisé en ce que l'élément piézo-électrique (1) fixé au support (14) est solidaire d'au moins un récipient (3,15) fermé et en ce qu'un grain (4,16) est emprisonné de manière mobile dans le ou chaque récipient (3,15), grain (4,16) qui lors de mouvements du support engendre des chocs sur la ou les parois du récipient (3,15), chocs qui se transmettent à l'élément piézo-électrique (1) et produisent des variations de charges électriques aux électrodes (2) de ce dernier.

2° Dispositif suivant la revendication 1, caractérisé en ce que le récipient est de forme polyédrique (3,9,10,11,12) et en ce que le grain est une bille (4).

3° Dispositif suivant la revendication 1, caractérisé en ce que le récipient est une sphère creuse (15) et le grain un polyèdre régulier (16)

4° Dispositif suivant une des revendications 1 ou 2, caractérisé en ce que le polyèdre est un cube (3)

5° Dispositif suivant une des revendications précédentes, caractérisé en ce que le grain (4,16) est en acier ou en un autre matériau à densité élevée.

6° Appareil équipé d'au moins un dispositif suivant une des revendications 1 à 5, caractérisé en ce qu'il comprend un ensemble (7) composé d'un système de gestion et d'une mémoire enregistrant les impulsions apparaissant aux électrodes (2) de l'élément ou des éléments piézo-électriques (1), ensemble agencé pour détecter et enregistrer des chocs engendrés par l'impact du grain (4,16) sur la ou les parois du récipient (3,15)

7° Appareil suivant la revendication 6, caractérisé en ce que l'ensemble système de gestion et mémoire (7) est précédé d'un ensemble amplificateur (5), générateur d'impulsions (6).

8° Appareil suivant la revendication 7, caractérisé en ce que l'ensemble amplificateur-générateur d'impulsions comprend un circuit à temps mort réglable

34.01/1956

9°Appareil suivant la revendication 7, caractérisé en ce que l'ensemble amplificateur-générateur d'impulsions comprend un détecteur de la violence d'un premier choc et un circuit à temps mort variable en fonction de la violence du premier choc d'une série de chocs.

10°Appareil suivant une des revendications 6 à 9 caractérisé en ce qu'il est associé à au moins un système de dépistage d'échantillons de mobilité particuliers et en ce qu'il comprend au moins un dispositif d'affichage actionné par le ou les systèmes de dépistage lors de l'apparition de tels échantillons de mobilité particuliers.

11°Appareil suivant une des revendications 6 à 10, caractérisé en ce que le système de gestion comprend un micro-calculateur associé à une mémoire-programme.

12°Appareil suivant une des revendications 6 à 10, caractérisé en ce que le système de gestion comprend des moyens de sélection et de classement de résultats de comptage et de mémorisation du nombre d'intervalles de comptage consécutifs entrant dans une même classe de résultats.

1/1

0171848

Fig.1

Fig.2

Fig.3

Fig.4

Fig.5

0171848

# RAPPORT DE RECHERCHE EUROPEENNE

Numero de la demande

EP 85 20 1202

| | DOCUMENTS CONSIDERES COMME PERTINENTS | | |
|---|---|---|---|
| Catégorie | Citation du document avec indication, en cas de besoin, des parties pertinentes | Revendication concernee | CLASSEMENT DE LA DEMANDE (Int Cl 4) |
| X | DE-A-2 405 752 (HANSEN) <br> * Page 2, lignes 16-34; figures * | 1,3,4 | G 01 P 13/00 <br> G 01 P 15/09 <br> G 01 P 1/12 |
| X | US-A-3 911 388 (CRUMP et al.) <br> * Colonne 5, lignes 12-40; figure 4 * | 1,2,5 | |
| A | | 7 | |
| X | FR-A-2 535 060 (ANTIVOLS SIMPLEX) <br> * Page 2, lignes 18-29; figure 2 * | 1,5 | |
| A | | 2 | |
| A | DE-B-1 206 634 (HAILER) <br><br> * Colonne 5, lignes 32-47; figures * | 1,6,7, 10,12 | DOMAINES TECHNIQUES RECHERCHES (Int. Cl.4) <br><br> G 01 P <br> G 01 C <br> G 08 B |
| A | US-A-4 016 766 (MORRIS) <br><br> * Colonne 4, ligne 55 - colonne 5, ligne 46; figures * | 6,7,10 ,12 | B 60 R <br> G 01 V |
| A | GB-A-2 093 180 (SHARAD GANESH PRADHAN) <br> * Page 2, lignes 51-81; figure 1 * | 11 | |

Le present rapport de recherche a été etabli pour toutes les revendications

| Lieu de la recherche <br> LA HAYE | Date d'achevement de la recherche <br> 26-11-1985 | HANSEN P Examinateur |
|---|---|---|

OEB Form 1503 03 82

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant